# EUROPÄISCHE PATENTSCHRIFT

(11) **EP 1 049 609 B1**
(45) Veröffentlichungstag und Bekanntmachung des Hinweises auf die Patenterteilung: **11.09.2002**
(21) Anmeldenummer: 99903618.9
(22) Anmeldetag: 11.01.1999
(51) Int. Cl.: B60S 1/08, G01N 21/43

(54) **VORRICHTUNG ZUR ÜBERWACHUNG DES ZUSTANDS EINER FENSTERSCHEIBE**
DEVICE FOR MONITORING THE STATE OF A WINDOW PANE
DISPOSITIF POUR LA SURVEILLANCE DE L'ETAT D'UNE VITRE DE FENETRE

(30) Priorität: 20.01.1998 DE 19801745
(43) Veröffentlichungstag der Anmeldung: 08.11.2000
(73) Patentinhaber: Valeo Auto-Electric Wischer und Motoren GmbH, 74321 Bietigheim-Bissingen (DE)
(72) Erfinder: GRABMAIER, Anton, D-74321 Bietigheim-Bissingen (DE); OSTERFELD, Martin, D-74321 Bietigheim-Bissingen (DE)
(74) Vertreter: Dreiss, Fuhlendorf, Steimle & Becker
(86) Internationale Anmeldenummer: EP9900102
(87) Internationale Veröffentlichungsnummer: WO99037512

(56) Entgegenhaltungen:
- US-A- 5 059 877
- "Optical rain sensor" SPIE WEB OE REPORTS [ONLINE]:NEWS FOR THE OPTOMECHANICAL AND PRECISION INSTRUMENT DESIGN WORKING GROUP, Bd. 168, Dezember 1997, XP002102190 http://www.spie.org/web/oer/december/dec97 /opid_wg.html#Optical
- PATENT ABSTRACTS OF JAPAN vol. 013, no. 209 (P-871), 17. Mai 1989 & JP 01 025036 A (NIPPON DENSO CO LTD), 27. Januar 1989
- "FOG SENSOR" CONTROL DEVICES, INC. INNOVATIVE SOLUTIONS,7. Mai 1999, XP002102191 Retrieved from internet: <url:http://www.controldevices.com/fog.htm >

## Beschreibung

Die Erfindung betrifft eine Vorrichtung zur Überwachung des Zustands einer Fensterscheibe, insbesondere Autofensterscheibe, nach dem Oberbegriff des Hauptanspruchs.

Der Komfort und die Sicherheit eines Kraftfahrzeugs kann durch eine automatische Betätigung der Wischanlage gesteigert werden. Üblicherweise werden hierzu optische Regensensoren eingesetzt, die direkt an der Innenseite der Scheibe angebracht sind. Der Scheibenzustand auf der Außenseite der Scheibe wird durch die Scheibe hindurch von dem Sensor detektiert. Der Überwachungsbereich ist dabei durch die Ausmaße des Sensors begrenzt und liegt außerhalb des Sichtfeldes des Fahrers.

Aus der Veröffentlichung "Optical Rain Sensor" (SPIE WEB OE REPORTS 'ONLINE!:NEWS FOR THE OPTOMECHANICAL AND PRECISION INSTRUMENT DESIGN WORKING GROUP, Bd. 168, Dezember 1997, XP002102190 http://www.spiw.org/web/oer/december/dec97/opid_wg.html#Optical) ist eine gattungsgemäße Vorrichtung bekannt geworden, bei der Sender und Empfänger von der Scheibe beabstandet sind.

Der vorliegenden Erfindung liegt die Aufgabe zugrunde, eine bekannte Vorrichtung dahingehend zu verbessern, daß eine senderspezifische - und damit leuchtfleckspezifische - Auswertung des von dem einzelnen Empfänger zur Verfügung gestellten Empfangssignal ermöglicht wird, was in der Praxis die gleichzeitige Überwachung verschiedener Scheibenbereiche gestattet.

Diese Aufgabe wird mit einer Vorrichtung gelöst, die die Merkmale des Hauptanspruchs aufweist.

Durch die Beabstandung sowohl des Senders als auch des Empfängers von der Scheibe wird erreicht, daß die Größe des Überwachungsbereichs unabhängig von den Ausmaßen der Vorrichtung gewählt werden kann. Ein weiterer Vorteil besteht darin, daß die Lage des Überwachungsbereichs weitestgehend frei vorgebbar ist und beispielsweise auch im direkten Sichtfeld eines Autofahrers angeordnet werden kann. Durch die Möglichkeit der Vorgabe einer geeigneten Größe und Lage des Überwachungsbereichs läßt sich die Zuverlässigkeit des erzielbaren Auswerteergebnisses wesentlich verbessern.

Außerdem läßt sich durch mehrere optische Sender eine höhere Sendeleistung erzielen, wodurch die Distanz zwischen dem Sensor und der Scheibe vergrößert werden kann. Dies ermöglicht günstigere Überwachungsgeometrien und bewirkt außerdem, daß der Winkel zwischen der optischen Achse des Senders bzw. Empfängers und der Scheibe flacher gewählt werden kann.

Dadurch, daß die Schaltung eine Diskriminatorstufe aufweist, welche aus dem Empfangssignal ein erstes und ein zweites Empfangssignal entsprechend dem erfaßten modulierten Licht von einem oder mehreren ersten und einem oder mehreren zweiten optischen Sendern ermittelt, wird eine senderspezifische - und damit auch leuchtfleckspezifische - Auswertung des von dem einzelnen Empfänger zur Verfügung gestellten Empfangssignals ermöglicht, was in der Praxis die gleichzeitige Überwachung verschiedener Scheibenbereiche gestattet.

Obwohl die Messung grundsätzlich auch in Transmission erfolgen kann, erfaßt der Empfänger vorzugsweise durch Reflexion oder Streuung an der Scheibe zurückgeworfenes Licht des Senders.

Ein ausreichend großer Überwachungsbereich bei gleichzeitig guter Intensität des zurückgeworfenen Lichts kann erreicht werden, wenn der Sender und der Empfänger unter einem Abstand von 10 bis 30 cm von der Scheibe entfernt angeordnet sind.

Vorzugsweise weist der von dem Lichtbündel auf die Scheibe projizierte Lichtfleck eine Fläche von mindestens 25 cm² und vorzugsweise etwa 100 cm² auf. Der allgemeine Zustand der Scheibe wird dann von dem zurückgeworfenen Licht in ausreichendem Maße repräsentiert, und lokale Änderung des Scheibenzustands, wie sie beispielsweise durch eine punktuelle Verschmutzung oder einen einzelnen großen Regentropfen verursacht werden, treten aufgrund der Größe des Überwachungsbereichs nicht störend in Erscheinung und können das Überwachungsergebnis nicht verfälschen, wie dies bei Sensoren der Fall ist, die direkt auf dem Glas aufgebracht sind und deshalb einen kleinen Überwachungsbereich aufweisen müssen.

Der Aussagewert des Überwachungsergebnisses wird erhöht, wenn der Scheibenzustand im Bereich des direkten Sichtfeldes eines Fahrers überwacht wird.

Vorzugsweise arbeitet der Sender im Infrarotbereich, weil dadurch verhindert wird, daß ein Fahrer oder eine andere durch die Scheibe blickende Person von störenden Reflexen beeinträchtigt wird. Des weiteren ist vorteilhaft, daß im Infrarotbereich kostengünstige optoelektronische Bauelemente wie beispielsweise Si-Photodioden (als Empfänger) und Infrarot-LEDs (als Sender) verfügbar sind.

Obwohl grundsätzlich auch mehrere optische Empfänger vorgesehen sein können, kennzeichnet sich eine bevorzugte Ausführungsvariante dadurch, daß die Vorrichtung nur einen optischen Empfänger umfaßt.

Eine einfache Möglichkeit zur Bildung des ersten und des zweiten Emfpangssignals besteht darin, daß die ersten und zweiten optischen Sender mit einem Impulssignal unterschiedlicher Phase angesteuert werden und die Diskriminatorstufe einen Phasensynchron-Demodulator umfaßt.

Vorzugsweise enthält die Auswerteschaltung eine Differenzstufe, die aus dem ersten und dem zweiten Empfangssignal ein Differenzsignal bildet. Aus dem zeitlichen Änderungsverhalten des Differenzsignals können unterschiedliche Scheibenzustände erkannt werden. Während festsitzende Verschmutzungen oder auch Beschädigungen der Scheibe sprunghafte, statische Veränderungen herbeiführen, werden durch große Regentropfen schnelle Änderungen und durch feine Regentropfen langsame Änderungen bewirkt. Anhand des auf diese Weise erkannten Scheibenzustands können dann weitere Maßnahmen wie beispielsweise die Regulierung der Scheibenwischergeschwindigkeit ergriffen werden.

Eine besonders kompakte Ausführung der erfindungsgemäßen Vorrichtung wird erreicht, wenn der Sender und der Empfänger in einem gemeinsamen Modul oder Gehäuse untergebracht sind.

Nach einer bevorzugten Ausgestaltung der vorliegenden Erfindung ist eingangsseitig des optischen Empfängers eine Empfangsoptik vorgesehen, die das von der Scheibe modulierte Licht auf den Empfänger konzentriert. Durch diese Maßnahme wird die Empfindlichkeit der Empfangsanordnung erhöht und somit ein größerer Abstand zwischen dem Sensor und der Scheibe ermöglicht.

Durch die Empfangsoptik wird eine Empfangszone auf der Scheibe definiert. Im Hinblick auf eine möglichst hohe Meßempfindlichkeit ist es bevorzugt, wenn die von den Lichtflecken der Lichtbündel auf der Scheibe gebildete Beleuchtungszone der von der Empfangsoptik definierten Empfangszone angepaßt ist.

Durch ein eingangsseitig vor dem optischen Empfänger angeordnetes optisches Filter können durch einstreuendes Nebenlicht verursachte Störungen verhindert werden, soweit das Nebenlicht eine unterschiedliche Wellenlänge zu dem Sendelicht aufweist. Bei einem im Infrarotbereich arbeitenden Sensor kann somit sichtbares Streulicht als potentielle Störungsursache effektiv ausgeschaltet werden.

Weitere vorteilhafte Ausgestaltungen der Erfindung sind in den Unteransprüchen angegeben.

Die Erfindung wird im folgenden anhand der Zeichnung in beispielhafter Weise beschrieben. In dieser zeigt:
- Fig. 1: eine schematische Darstellung eines Schaltungsaufbaus einer Ausführungsform der vorliegenden Erfindung;
- Fig. 2: eine Detaildarstellung der in Fig. 1 gezeigten Signalverarbeitungsstufe;
- Fig. 3: eine erstes Beispiel einer Sender/Empfängeranordnung;
- Fig. 4: ein weiteres Beispiel einer Sender/Empfängeranordnung;
- Fig. 5: eine Darstellung eines ersten Überwachungsbereichs mit im wesentlichen quadratischer Form;
- Fig. 6: eine Darstellung eines zweiten Überwachungsbereichs mit im wesentlichen quadratischer Form;
- Fig. 7: eine Darstellung eines weiteren Überwachungsbereichs mit im wesentlichen quadratischer Form; und
- Fig. 8: eine Darstellung eines Überwachungsbereichs mit länglicher Form.

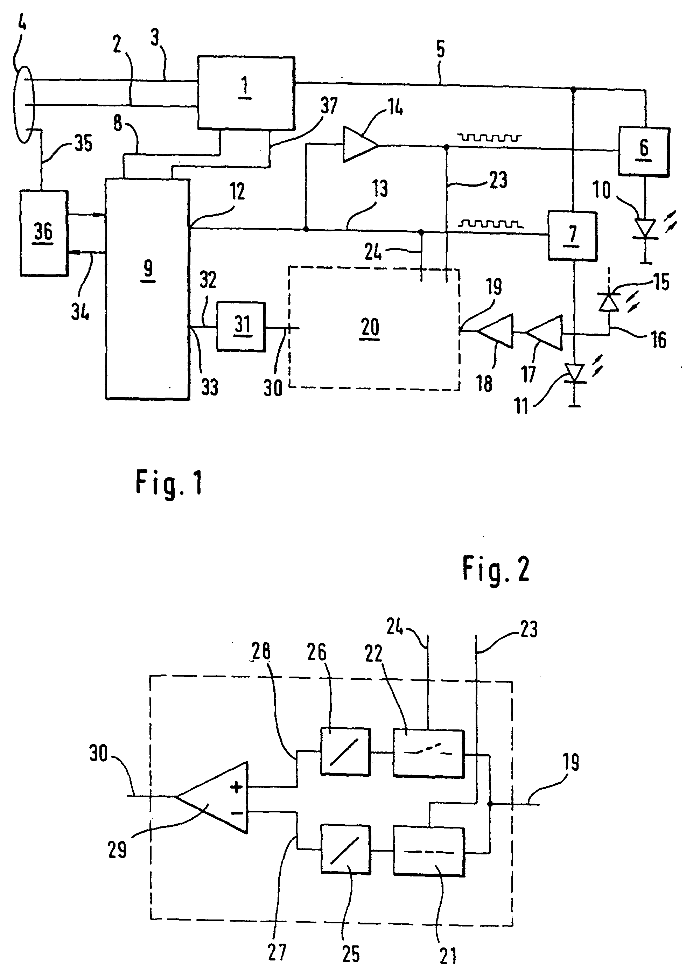

Nach Fig. 1 weist eine erfindungsgemäße Vorrichtung eine interne Spannungsversorgung 1 auf, die über Versorgungsspannungsleitungen 2, 3 mit einer in Fig. 1 nicht dargestellten externen Spannungsquelle, beispielsweise dem Bordnetz eines Kraftfahrzeugs, in Verbindung steht. Mit dem Bezugszeichen 4 ist eine Gehäusedurchführung angedeutet. Die interne Spannungsversorgung 1 speist über eine Spannungsversorgungsleitung 5 zwei Schaltstromquellen 6 und 7 und über eine Spannungsversorgungsleitung 8 einen Mikrocontroller 9. Die Schaltstromquellen 6 und 7 stehen ausgangsseitig mit einem ersten optischen Sender 10 bzw. einem zweiten optischen Sender 11 in elektrischer Verbindung. Die optischen Sender 10, 11 arbeiten im Infrarotbereich und können beispielsweise durch III-V-Halbleiter LEDs realisiert sein.

Die Ansteuerung der optischen Sender 10, 11 erfolgt über den Mikrocontroller 9. An einem Digitalausgang 12 des Mikrocontrollers 9 steht ein Impulssignal mit einer Frequenz von beispielsweise 50 kHz zur Verfügung. Das Impulssignal wird dem Schalteingang der Stromquelle 7 über eine Steuerleitung 13 direkt zugeführt, während es den Schalteingang der Stromquelle 6 erst nach Durchlaufen eines 180°-Inverters 14 erreicht. Das von dem Inverter 14 ausgegebene Schaltsignal ist somit zu dem Schaltsignal in der Steuerleitung 13 um 180° phasenverschoben, was zur Folge hat, daß die Schaltstromquellen 6, 7 alternierend ein- und ausgeschaltet und die optischen Sender 10, 11 somit alternierend betrieben werden.

Das von den Sendern 10, 11 emittierte Licht gelangt auf eine in Fig. 1 nicht dargestellte Scheibe und wird in noch näher zu beschreibender Weise von dieser auf einen Empfänger 15 zurückgeworfen. Der Empfänger 15 kann beispielsweise durch eine Si-Photodiode realisiert sein.

Das von dem Empfänger 15 ausgegebene Empfangssignal 16 wird von einem Verstärker 17 verstärkt und durchläuft nachfolgend ein Bandpaßfilter 18. Das Ausgangssignal 19 des Bandpaßfilters 18 wird einer Signalverarbeitungsschaltung 20 zugeführt.

Der Schaltungsaufbau der Signalverarbeitungsschaltung 20 ist in Fig. 2 dargestellt. Das Ausgangssignal 19 wird den Eingängen zweier Schalter 21, 22 zugeleitet, die über Schalterzuleitungen 23, 24 entsprechend dem Impulssignal bzw. dem invertierten Impulssignal alternierend angesteuert werden. Auf diese Weise steht am Ausgang des Schalters 21 der von dem ersten Sender 10 bewirkte Signalanteil und an dem Ausgang des Schalters 22 der von dem zweiten Sender 11 bewirkte Signalanteil des Ausgangssignals 19 zur Verfügung.

Diese Signalanteile werden in jeweils nachgeschalteten Integrierern 25, 26 integriert und als erstes bzw. zweites Ausgangssignal 27, 28 dem invertierenden bzw. nichtinvertierenden Eingang eines Differenzverstärkers 29 zugeführt. Durch den Differenzverstärker 29 wird der Signalunterschied zwischen dem ersten und dem zweiten Ausgangssignal 27 und 28 sehr empfindlich verstärkt und als analoges Differenzsignal 30 ausgegeben.

Der Pegel des Differenzsignals 30 ist somit ein Maß für den Unterschied der von dem ersten optischen Sender 10 und dem zweiten optischen Sender 11 empfangenen Lichtmengen. Da die beiden optischen Sender 10, 11 unterschiedliche Scheibenbereiche beleuchten, repräsentiert der Pegel des Differenzsignals 30 ein Maß für örtliche Unterschiede im Reflexions-und/oder Streuverhalten der Scheibe.

Das Differenzsignal 30 wird, wie in Fig. 1 dargestellt, einem A/D-Umsetzer 31 zugeführt und von diesem in ein Digitalsignal 32 gewandelt. Das Digitalsignal 32 wird einem Digitaleingang 33 des Mikrocontrollers 9 zugeleitet.

Das Digitalsignal 32 wird von dem Mikrocontroller 9 in bezug auf die Signalhöhe und die zeitliche Änderung der Signalhöhe ausgewertet. Das zeitliche Änderungsverhalten des Signals dient dabei der Erkennung von unterschiedlichen Scheibenzuständen, wie sie beispielsweise durch Regentropfen (schnelle Änderungen), feinen Nieselregen (langsame Änderungen) oder Beschädigungen und festsitzende Verschmutzungen (sprunghafte, statische Änderungen) bewirkt werden. Die vom Mikrocontroller 9 gewonnene Information wird über eine bidirektionale Datenleitung 34 einem Treiber 36 zugeführt, der über eine Leitung 35 mit einem nicht dargestellten, externen Datenbus des Kraftfahrzeugs in serieller Datenverbindung steht.

Über eine Steuerleitung 37 zwischen der internen Spannungsversorgung 1 und dem Mikrocontroller 9 erfolgt beim Starten des Kraftfahrzeugs ein Reset (Zurücksetzen) des Mikrocontrollers 9 in einen definierten Anfangszustand. Der Anfangszustand ist in der Regel werkseitig vorgegeben und kann von dem Benutzer über den Treiber 36 sowie die bidirektionalen Datenleitungen 34, 35 nach Wunsch umprogrammiert werden.

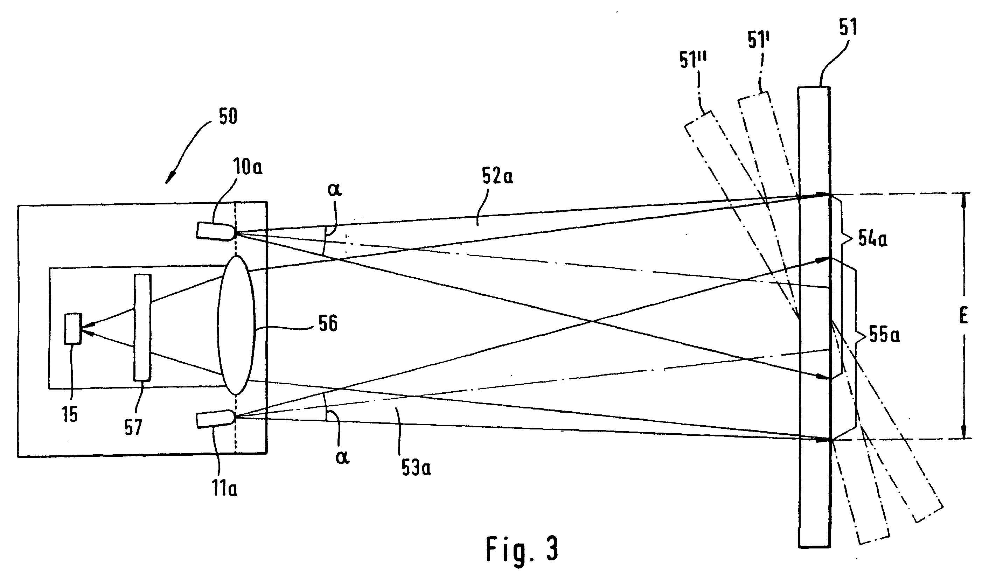

Fig. 3 zeigt ein erstes Beispiel eines Regensensormoduls 50 sowie dessen Positionierung in bezug auf eine Scheibe 51. Das Modul 50 weist als ersten optischen Sender eine IR-LED 10a und als zweiten optischen Sender eine IR-LED 11a auf. Die beiden IR-LEDs 10a, 11a erzeugen Beleuchtungslichtkegel 52a und 53a mit jeweils identischem Öffnungswinkel α. Der Öffnungswinkel α kann durch eine geeignete LED-Optik bzw. zusätzliche Linsen definiert werden. Fig. 3 macht deutlich, daß die Beleuchtungslichtkegel 52a, 53a unterschiedliche Lichtflecke 54a, 55a auf der Scheibe 51 ausleuchten. Die Lichtflecke 54a, 55a können sich wie in dem hier gezeigten Beispiel teilweise überlappen.

Das Modul 50 weist ferner eine Empfangslinse 56, ein optisches IR-Filter 57 und den bereits in Zusammenhang mit Fig. 1 beschriebenen IR-Empfänger 15 auf. Der Empfänger 15 ist auf der optischen Achse der Empfangsline 56 angeordnet und von dieser unter einem vorgegebenen Abstand beabstandet. Durch den Abstand zwischen dem Empfänger 15 und der Empfangslinse 56 sowie durch die Linsenstärke und die Form der Linse wird auf der Scheibe 51 eine Empfangszone E definiert. Nur im Bereich der Empfangszone E von der Scheibe zurückgeworfenes (d.h. zurückgestreutes oder reflektiertes) Licht kann von dem Empfänger 15 erfaßt werden.

Die Arbeitsweise des Moduls 50 ist wie folgt: Mittels der in Fig. 1 erläuterten Ansteuerung der IR-LEDs 10a und 11a werden die Lichtflecke 54a und 55a alternierend ausgeleuchtet. Der Empfänger 15 detektiert abwechselnd das aus beiden Lichtflecken 54a und 55a zurückkommende Streu- bzw. Reflexionslicht. Durch den in Fig. 1 beschriebenen Schaltungsaufbau wird dann ein gegebenenfalls unterschiedliches Reflexions- und Streuverhalten der Scheibe 51 in den Bereichen der Lichflecke 54a und 55a nachgewiesen und in bezug auf zeitliche Änderungen ausgewertet. Da die Empfangszone E beide Lichtflecke 54a und 55a überdeckt, tragen alle beleuchteten Bereiche der Scheibe 51 zu einem Signal bei, so daß eine maximale Lichtausbeute und damit eine maximale Empfindlichkeit erreicht wird. Ferner wird die Meßempfindlichkeit auch durch die Größe der Lichtflecken 54a und 55a relativ zueinander bestimmt. Bei Lichtflecken identischer Größe wird eine maximale Empfindlichkeit erzielt, weil in diesem Fall der Signalabgleich in dem Phasensynchron-Demodulator 21, 22, 25, 26 mit größtmöglichster Genauigkeit durchführbar ist.

Bei einer gegenüber der optischen Achse der Empfangslinse 56 geneigt angeordneten Scheibe 51' bzw. 51" liegen grundsätzlich vergleichbare Verhältnisse vor, wobei sich bei identischen Öffnungswinkeln α der LEDs jedoch unterschiedliche Größen der Lichtflecke 54a und 55a sowie unterschiedliche Entfernungen derselben von dem Empfänger 15 einstellen. Dieser Situation kann durch eine unterschiedliche Auslegung der LEDs 10a, 11a in bezug auf ihre Optik und/oder Beleuchtungsstärke sowie durch eine asymetrische Signalauswertung Rechnung getragen werden. Ferner ist zu berücksichtigen, daß bei einer geneigten Scheibe 51', 51" Reflexionsanteile des zurückgeworfenen Lichts vermehrt aus dem Strahlengang der Empfangslinse 56 herausgespiegelt werden, was durch eine geeignete axial asymmetrische Anordnung der LEDs sowie durch eine höhere Beleuchtungsintensität weitgehend kompensiert werden kann.

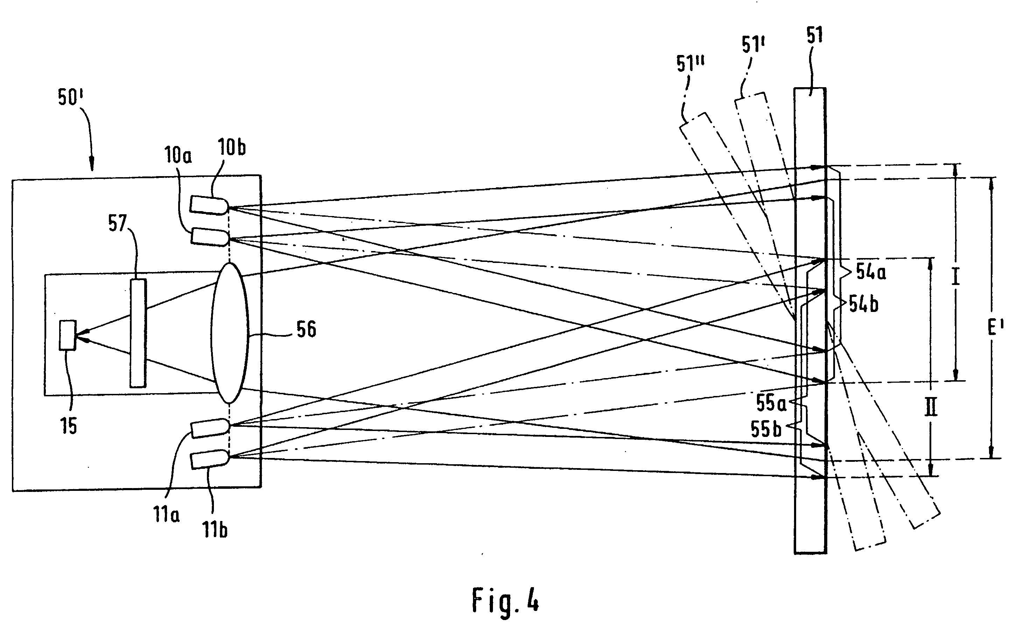

Fig. 4 zeigt ein zweites Modulbeispiel 50' mit vier IR-LEDs 10a, 10b und 11a, 11b. Dabei werden die IR-LEDs 10a, 10b wie auch die IR-LEDs 11a, 11b gemäß Fig. 1 jeweils gemeinsam angesteuert. Die von den gemeinsam angesteuerten IR-LEDs 10a, 10b erzeugten Lichtflecken 54a, 54b bilden zusammen eine erste Beleuchtungszone I, während sich die Lichtflecken 55a, 55b der IR-LEDs 11a, 11b zu einer zweiten Beleuchtungszone II zusammensetzen. Gemessen wird ein unterschiedliches Reflexions- bzw. Streuverhalten der Scheibe 51 in den Beleuchtungszonen I und II. Die Empfangszone E' liegt dabei innerhalb des von den beiden Beleuchtungszonen I und II gebildeten Gesamtbeleuchtungsbereichs.

Aufgrund der Erhöhung der Anzahl der IR-LEDs 10a, 10b, 11a, 11b im Vergleich zu dem in Fig. 3 gezeigten ersten Modul 50 ist eine größere Distanz zwischen dem Regensensormodul 50' und der Scheibe 51 möglich und es kann ferner ein flacherer Winkel zwischen der optischen Achse der Linse 56 und der Scheibe 51', 51" hingenommen werden.

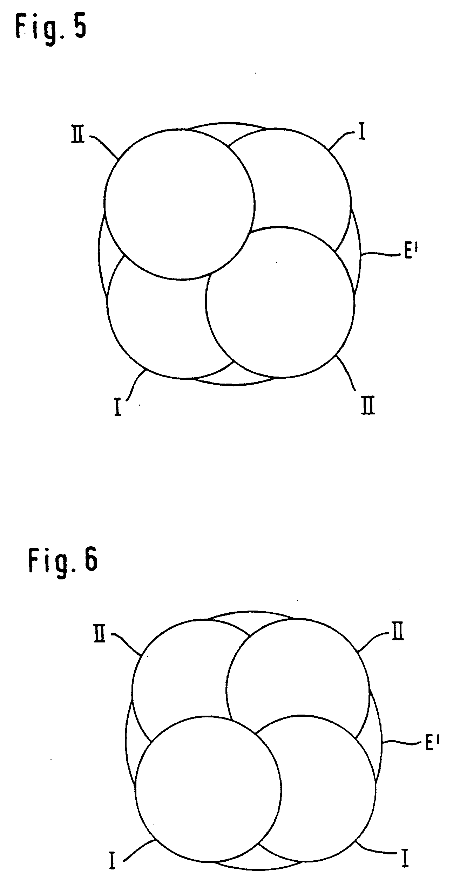

Die Fig. 5, 6, 7 und 8 zeigen verschiedene Möglichkeiten der Beleuchtung der Scheibe 51 sowie der Wahl der Empfangszone E.

Nach Fig. 5 bilden vier Lichtflecke sich kreuzende, diagonal angeordnete Beleuchtungszonen I und II aus. Die Empfangszone E zeigt eine gute Überlappung mit der Gesamtbeleuchtungszone I und II.

Nach Fig. 6 werden durch vier Lichtflecke zwei übereinanderliegend angeordnete Beleuchtungszonen I und II erzeugt. Auch hier besteht eine gute Überlappung zwischen der Gesamtbeleuchtungszone I und II und der Empfangszone E'.

Die in den Fig. 5 und 6 gezeigten Geometrien können mit dem in Fig. 4 beschriebenen Modul 50' erzeugt werden.

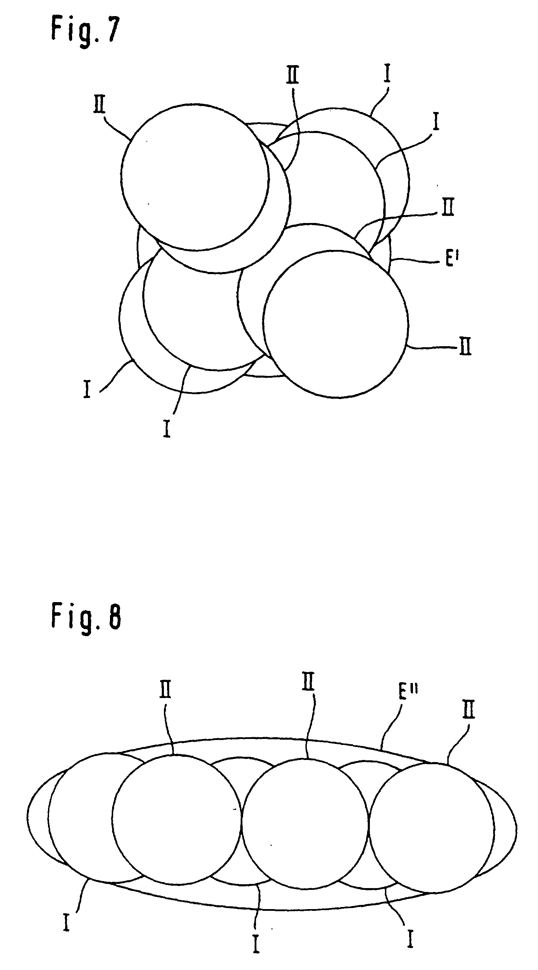

Fig. 7 zeigt Beleuchtungszonen I und II, die insgesamt von acht Lichtflecken gebildet werden. Die Beleuchtungszonen I und II sind ähnlich wie in Fig. 5 diagonal gekreuzt angeordnet. Die Empfangszone E' ist wie in den Fig. 5 und 6 kreisscheibenförmig ausgebildet.

In Fig. 8 werden die Beleuchtungszonen I und II durch sechs nebeneinanderliegende Lichtflecken aufgebaut, wobei benachbarte Lichtflecke jeweils unterschiedlichen Beleuchtungszonen I bzw. II zugeordnet sind. Die hier ellipsen- oder zigarrenförmige Empfangszone E'' umschreibt nahezu die gesamte beleuchtete Fläche und kann in geeigneter Weise durch eine Kombination einer sphärischen Linse mit einer Zylinderlinse oder durch eine astigmatische Linse erreicht werden. Die in Fig. 8 gezeigte Beleuchtungsgeometrie entspricht dem Sichtfeld eines Fahrers in einem Kraftfahrzeug, wodurch eine in besonderem Maße wahrnehmungsangepaßte Meßwerterfassung und somit Scheibenwischerregelung erzielbar ist.

Bei Abnutzung wie z.B. Kratzer auf der Scheibe sind die beiden Zweige des Sensors nicht ausgeglichen. Daher werden in diesem Fall die Senderbereiche I und II nicht abwechselnd mit dem Tastverhältnis von 50 : 50 betrieben, sondern mit einem asymmetrischen Tastverhältnis von z.B. 70 : 30 betrieben. Durch den Einsatz eines integrierenden Phasensynchrondemodulator kann dieses asymmetrische Verhalten berücksichtigt werden.

Durch dieses variable Tastverhältnis regelt der Sensor damit Fehler, Verschmutzungen und andere statische Ereignisse aus. Der Sensor erkennt eine Änderung als statisch wenn diese eine charakteristischew Zeitkonstante überschreitet.

## Patentansprüche

1. Vorrichtung zur Überwachung des Zustands einer Fensterscheibe, insbesondere Kraftfahrzeugfensterscheibe, bestehend aus einer Mehrzahl optischer Sender (10; 11), die Lichtbündel (52a; 53a) zu einer Scheibe (51, 51', 51'') hin aussenden, mindestens einem optischen Empfänger (15), der von der Scheibe (51, 51', 51'') moduliertes Licht des Lichtbündels (52a; 53a) erfaßt und daraufhin ein Empfangssignal (16) erzeugt und einer Auswerteschaltung (17, 18, 20, 31, 9) die das Empfangssignal (16) zur Ermittlung des Scheibenzustands auswertet, wobei die Sender (10; 11) und der Empfänger (15) von der Scheibe (51, 51', 51'') beabstandet angeordnet sind, **dadurch gekennzeichnet, daß** die Auswerteschaltung eine Diskriminatorstufe umfaßt, welche aus dem Empfangssignal (16) ein erstes und ein zweites Empfangssignal (27, 28) entsprechend dem erfaßten modulierten Licht von einem oder mehreren ersten (10a, 10b) und einem oder mehreren zweiten (11a, 11b) optischen Sendern ermittelt.

2. Vorrichtung nach Anspruch 1, **dadurch gekennzeichnet, daß** es sich bei dem von dem Empfänger (15) empfangenen Licht um reflektiertes oder gestreutes Licht des Lichtbündels (52a, 53a) handelt.

3. Vorrichtung nach Anspruch 1 oder 2, **dadurch gekennzeichnet, daß** der Sender (10; 11) und der Empfänger (15) unter einen Abstand von etwa 10 bis 30 cm von der Scheibe entfernt angeordnet sind.

4. Vorrichtung nach einem der vorhergehenden Ansprüche, **dadurch gekennzeichnet, daß** der von dem Lichtbündel (52a; 53a) auf die Scheibe (51, 51', 51") projezierte Lichtfleck (54a; 55a) eine Fläche von mindestens 25 cm² und vorzugsweise etwa 100 cm² aufweist.

5. Vorrichtung nach einem der vorhergehenden Ansprüche, **dadurch gekennzeichnet, daß** der Scheibenzustand in zumindest zwei unterschiedlichen Scheibenbereichen (I, II) überwacht wird.

6. Vorrichtung nach einem der vorhergehenden Ansprüche, **dadurch gekennzeichnet, daß** der Scheibenzustand im Bereich des direkten Sichtfeldes des Fahrers überwacht wird.

7. Vorrichtung nach einem der vorhergehenden Ansprüche, **dadurch gekennzeichnet, daß** der Sender (10; 11) im Infrarotbereich arbeitet und insbesondere eine Infrarot-LED (10a, 10b; 11a, 11b) ist.

8. Vorrichtung nach einem der vorhergehenden Ansprüche, **dadurch gekennzeichnet, daß** die Vorrichtung einen einzigen optischen Empfänger (15) umfaßt, der das von der Scheibe (51, 51', 51'') modulierte Licht der Mehrzahl der von den optischen Sendern (10, 11) ausgesendeten Lichtbündeln (52a, 53a) empfängt.

9. Vorrichtung nach einem der vorhergehenden Ansprüche, **dadurch gekennzeichnet, daß** die ersten (10a, 10b) und zweiten (11a, 11b) optischen Sender mit einem Impulssignal von unterschiedlicher Phase angesteuert werden und die Diskriminatorstufe einen Phasensynchron-Demodulator (21, 22, 25, 26) umfaßt.

10. Vorrichtung nach einem der vorhergehenden Ansprüche, **dadurch gekennzeichnet, daß** die Auswerteschaltung eine Differenzstufe (29) umfaßt, die aus dem ersten (27) und dem zweiten (28) Empfangssignal ein Differenzsignal (30) bildet.

11. Vorrichtung nach Anspruch 10, **dadurch gekennzeichnet daß** die Auswerteschaltung (17, 18, 20, 31, 9) einen Mikrocontroller (9) umfaßt, dem das Differenzsignal (30) zugeführt wird und der das zeitliche Änderungsverhalten des Differenzsignals (30) auswertet.

12. Vorrichtung nach einem der vorhergehenden Ansprüche, **gekennzeichnet durch** zumindest 4 optische Sender (10a, 10b, 11a, 11b), deren Lichtbündel eine von einander teilweise überlappenden Lichtflecken (54a, 54b, 55a, 55b) gebildete, im wesentlichen rechteckige Beleuchtungszone (I, II) auf der Scheibe (51, 51', 51'') ausleuchten.

13. Vorrichtung nach einem der vorhergehenden Ansprüche, **gekennzeichnet durch** mindestens drei optische Sender, deren Lichtbündel eine von einander teilweise überlappenden Lichtflecken gebildete, im wesentlichen längliche Beleuchtungszone (I, II) auf der Scheibe (51, 51', 51") ausleuchten.

14. Vorrichtung nach einem der vorhergehenden Ansprüche, **dadurch gekennzeichnet, daß** Sender (10, 11) und Empfänger (15) in einem gemeinsamen Modul (51) oder Gehäuse untergebracht sind.

15. Vorrichtung nach einem der vorhergehenden Ansprüche, **dadurch gekennzeichnet daß** eingangsseitig des optischen Empfängers (15) eine Empfangsoptik (56) vorgesehen ist, die das von der Scheibe (51, 51', 51'') modulierte Licht auf den Empfänger (15) konzentriert.

16. Vorrichtung nach Anspruch 15, **dadurch gekennzeichnet, daß** die Empfangsoptik (56) so ausgelegt ist, daß eine von der Empfangsoptik (56) auf der Scheibe definierte Empfangszone (E, E', E") an die von den Lichtflecken (54a, 54b, 55a, 55b) der Lichtbündel (52a, 53a) auf der Scheibe (51, 51', 51'') gebildete Beleuchtungszone (I, II) angepaßt ist.

17. Vorrichtung nach Anspruch 15 oder 16, **dadurch gekennzeichnet, daß** die Empfangsoptik eine sphärische Linse (56) und/oder eine Zylinderlinse und/oder eine astigmatische Linse umfaßt.

18. Vorrichtung nach einem der vorhergehenden Ansprüche, **dadurch gekennzeichnet, daß** eingangsseitig des optischen Empfängers (15) ein optisches Filter (57) vorgesehen ist.

## Claims

1. Device for monitoring the state of a window pane, in particular an automobile window pane, consisting of a plurality of optical transmitters (10; 11) which emit a light beam (52a; 53a) onto a pane (51, 51', 51"), at least one optical receiver (15) which receives the light of the light beam (52a; 53a) modulated by the pane (51, 51', 51") and subsequently generates a reception signal (16), and an evaluation circuit (17, 18, 20, 31, 9) that evaluates the reception signal (16) to determine the state of the pane, wherein the transmitters (10; 11) and the receiver (15) are located at a distance from the pane **characterized in that** the evaluation circuit is composed of a discriminator stage which uses the reception signal (16) to derive a first and a second reception signal (27, 28) according to the detected modulated light from one or more first optical transmitters (10a, 10b) and one or more second optical transmitters (11a, 11b).

2. Device according to claim 1, **characterized in that** the light received by the receiver (15) pertains to reflected or scattered light from the light beam (52a, 53a).

3. Device according to claim 1 or 2, **characterized in that** the transmitter (10; 11) and the receiver (15) are located at a distance of about 10 to 30 cm away from the pane.

4. Device according to one of the preceding claims, **characterized in that** the light spot (54a; 55a) projected from the light beam (52a; 53a) onto the pane (51, 51', 51") has a surface area of at least 25 cm² and preferably about 100 cm².

5. Device according to one of the preceding claims, **characterized in that** the state of the window pane is monitored in at least two different regions (I, II) of the pane.

6. Device according to one of the preceding claims, **characterized in that** the state of the window pane is monitored in the region of the immediate field of view of the driver.

7. Device according to one of the preceding claims, **characterized in that** the transmitter (10; 11) operates in the infrared range and is in particular an infrared LED (10a, 10b; 11a, 11b).

8. Device according to one of the preceding claims, **characterized in that** the device is composed of a single optical receiver (15) which receives the light modulated by the pane (51, 51', 51") from the majority of the light beams (52a, 53a) emitted from the optical transmitters (10, 11).

9. Device according to one of the preceding claims **characterized in that** the first (10a, 10b) and second (11a, 11b) optical transmitters are controlled by a pulse signal of different phase and the discriminator stage is composed of a phase-synchronous demodulator (21, 22, 25, 26).

10. Device according to one of the preceding claims, **characterized in that** the evaluation circuit is composed of a difference stage (29) which forms a difference signal (30) from the first reception signal (27) and the second reception signal (28).

11. Device according to claim 10, **characterized in that** the evaluation circuit (17, 18, 20, 31, 9) is composed of a micro controller (9) that is supplied with the difference signal (30) and that evaluates the temporal change in behavior of the difference signal (30).

12. Device according to one of the preceding claims, **characterized by** at least 4 optical transmitters (10a, 10b, 11a, 11b) whose light beams illuminate an essentially rectangular illuminated zone (I, II) an the pane (51, 51 ', 51 ") formed by partially overlapping light spots (54a, 54b, 55a, 55b).

13. Device according to one of the preceding claims, **characterized by** at least 3 optical transmitters whose light beams illuminate an essentially elongated illuminated zone (I, II) an the pane (51, 51', 51") formed by partially overlapping light spots.

14. Device according to one of the preceding claims, **characterized in that** transmitter (10, 11) and receiver (15) are housed in a common module (51) or housing.

15. Device according to one of the preceding claims, **characterized in that** on the input side of the optical receiver (15) there is a reception lens (56) which concentrates the light modulated by the pane (51, 51 ", 51") onto the receiver (15).

16. Device according to claim 15, **characterized in that** the reception lens (56) is designed so that a reception zone (E, E', E") defined by the reception lens (56) an the pane is adapted to the illuminated zone (I, II) formed an the pane (51,51',51") by the light spots (54a, 54b, 55a, 55b) of the light beam (52a, 53a).

17. Device according to claim 15 or 16, **characterized in that** the reception lens is a spherical lens (56) and/or a cylindrical lens and/or an astigmatic lens.

18. Device according to one of the preceding claims, **characterized in that** there is an optical filter (57) on the input side of the optical receiver (15).

## Revendications

1. Dispositif destiné à surveiller l'état d'une vitre, en particulier d'une vitre pour véhicule automobile, comprenant une pluralité d'émetteurs optiques (10 ; 11), qui émettent des faisceaux de lumière (52a ; 53a) vers une vitre (51, 51', 51"), au moins un récepteur optique (15), qui capte la lumière du faisceau lumineux (52a; 53a), modulée par la vitre (51, 51', 51"), et génère à la suite de cela un signal de réception (16), et un circuit d'analyse (17, 18, 20, 31, 9), qui analyse le signal de réception (16) destiné à déterminer l'état de la vitre, sachant que les émetteurs (10; 11) et le récepteur (15) sont disposés à une distance donnée de la vitre (51, 51', 51"), **caractérisé en ce que** le circuit d'analyse comporte un niveau discriminateur qui convertit le signal de réception (16) en un premier et un deuxième signal de réception (27, 28) conformément à la lumière modulée interceptée, provenant d'un ou plusieurs premiers émetteurs optiques (10a, 10b) et d'un ou plusieurs deuxièmes émetteurs optiques (11a, 11b).

2. Dispositif selon la revendication 1, **caractérisé en ce que** la lumière captée par le récepteur (15) est la lumière réfléchie ou diffusée du faisceau de lumière (52a, 53a).

3. Dispositif selon la revendication 1 ou 2, **caractérisé en ce que** l'émetteur (10 ; 11) et le récepteur (15) sont disposés à une distance de 10 à 30 cm environ de la vitre.

4. Dispositif selon l'une des revendications précédentes, **caractérisé en ce que** la tache de lumière (54a ; 55a) projetée par le faisceau de lumière (52a ; 53a) sur la vitre (51, 51', 51") occupe une surface de 25 cm² au moins et de préférence égale à 100 cm² environ.

5. Dispositif selon l'une des revendications précédentes, **caractérisé en ce que** l'état de la vitre est surveillé dans au moins deux zones (I, II) différentes de la vitre.

6. Dispositif selon l'une des revendications précédentes, **caractérisé en ce que** l'état de la vitre est surveillé dans la zone du champ de vision direct du conducteur.

7. Dispositif selon l'une des revendications précédentes, **caractérisé en ce que** l'émetteur (10 ; 11) fonctionne dans le domaine de l'infrarouge et est en particulier une diode électroluminescente infrarouge (10a 10b ; 11a, 11b).

8. Dispositif selon l'une des revendications précédentes, **caractérisé en ce que** ledit dispositif comporte un seul récepteur optique (15), qui capte la lumière modulée par la vitre (51, 51', 51") et issue des faisceaux de lumière (52a, 53a) émis par les émetteurs optiques (10, 11).

9. Dispositif selon l'une des revendications précédentes, **caractérisé en ce que** les premiers émetteurs optiques (10a, 10b) et les deuxièmes émetteurs optiques (11a, 11b) sont activés par un signal d'impulsion de phase différente et le niveau discriminateur comporte un démodulateur à synchronisation de phases (21, 22, 25, 26).

10. Dispositif selon l'une des revendications précédentes, **caractérisé en ce que** le circuit d'analyse comporte un niveau différenciateur (29), qui génère un signal différentiel (30) à partir du premier (27) et du deuxième (28) signal de réception.

11. Dispositif selon la revendication 10, **caractérisé en ce que** le circuit d'analyse (17, 18, 20, 31, 9) comporte un microcontrôleur (9), vers lequel est acheminé le signal différentiel (30) et lequel analyse le comportement de variation dans le temps du signal différentiel (30).

12. Dispositif selon l'une des revendications précédentes, **caractérisé par** au moins 4 émetteurs optiques (10a, 10b, 11a, 11b), dont les faisceaux de lumière projettent sur la vitre (51, 51', 51") une zone éclairée (I, II) sensiblement rectangulaire, formée par les taches de lumière (54a, 54b, 55a, 55b) qui se chevauchent partiellement.

13. Dispositif selon l'une des revendications précédentes, **caractérisé par** au moins 3 émetteurs optiques, dont les faisceaux de lumière projettent sur la vitre (51, 51', 51") une zone éclairée (I, II) sensiblement allongée, formée par les taches de lumière qui se chevauchent partiellement.

14. Dispositif selon l'une des revendications précédentes, **caractérisé en ce que** l'émetteur (10, 11) et le récepteur (15) sont logés dans un module (51) ou boîtier commun.

15. Dispositif selon l'une des revendications précédentes, **caractérisé en ce qu'**il est prévu, du côté de l'entrée du récepteur optique (15), un collecteur de lumière (56), qui focalise sur le récepteur (15) la lumière modulée par la vitre (51, 51', 51").

16. Dispositif selon la revendication 15, **caractérisé en ce que** le collecteur de lumière (56) est conçu de telle sorte qu'une zone de réception (E, E', E"), définie par le collecteur de lumière (56) sur la vitre, est adaptée à la zone éclairée (I, II) formée sur la vitre (51, 51', 51") par les taches de lumière (54a, 54b, 55a, 55b) des faisceaux de lumière (52a, 53a).

17. Dispositif selon la revendication 15 ou 16, **caractérisé en ce que** le collecteur de lumière comporte une lentille sphériqué (56) et/ou une lentille cylindrique et/ou une lentille astigmatique.

18. Dispositif selon l'une des revendications précédentes, **caractérisé en ce qu'**il est prévu un filtre optique (57) du côté de l'entrée du récepteur optique (15).
